# FASCICULE DE BREVET EUROPEEN

(11) **EP 4 024 141 B1**
(45) Date de publication et mention de la délivrance du brevet: **26.11.2025**
(21) Numéro de dépôt: 21405002.3
(22) Date de dépôt: 19.05.2021
(51) Int. Cl.: G04R 60/04, G04G 21/04, G04B 39/00

(54) **VERRE DE MONTRE CONTENANT UN MODULE DE COMMUNICATION EN CHAMPS PROCHE NFC ET PROCÉDÉ DE FABRICATION D'UN TEL VERRE**
ARMBANDUHRENGLAS MIT NFC-NAHFELDKOMMUNIKATIONSMODUL UND VERFAHREN ZUR HERSTELLUNG EINES SOLCHEN GLASES
WATCH GLASS CONTAINING A NEAR-FIELD COMMUNICATION NFC MODULE AND METHOD FOR MANUFACTURING SUCH A GLASS

(30) Priorité: 29.12.2020 CH 16832020
(43) Date de publication de la demande: 06.07.2022
(73) Titulaire: Winwatch IP Ltd, 1950 Sion (CH)
(72) Inventeur: Kalbermatten, Alex, 1950 Sion (CH)
(74) Mandataire: P&TS SA (AG, Ltd.)

(56) Documents cités:
- EP-A1- 2 495 621
- EP-B1- 1 597 636
- CH-A2- 713 968

## Description

### DOMAINE TECHNIQUE DE L'INVENTION

L'invention concerne un verre de montre contenant un module de communication en champs proche NFC (Near Field Communication). Un tel verre peut par exemple permettre d'équiper une montre d'un module de communication en champ proche NFC, afin d'utiliser ladite montre comme un moyen de paiement sans contact en approchant la montre d'un lecteur de paiement (POS terminal) pour procéder au paiement, ou afin d'améliorer son suivi tout au long de sa durée de vie ou encore pour lutter contre les contrefaçons dont elle peut faire l'objet, ou pour offrir des services et fonctions pour le porteur de la montre, comme par exemple l'accès physique ou l'identification digitale. L'invention concerne également un procédé de fabrication d'un tel verre. L'invention concerne enfin une montre comprenant un tel verre.

### ETAT DE LA TECHNIQUE

Il est connu de munir une montre, par exemple une montre-bracelet, d'un module de communication en champ proche NFC. Un tel module offre alors à la montre de nouvelles fonctionnalités permettant une communication dite sans contact avec son environnement. Le module est alors typiquement constitué d'un microcircuit relié à une antenne. De manière générale dans l'état de l'art, un tel module de communication en champ proche NFC est disposé dans le boîtier, dans le bracelet, dans la lunette ou encore dans le verre de montre. Un tel verre est décrit dans le brevet CH692069. Toutefois ce brevet reste muet pour décrire comment intégrer un transpondeur dans le verre d'une montre et manque donc de clarté de façon telle que l'homme de métier ne peut pas l'exécuter. Un procédé d'intégration d'un module électronique dans le verre d'une montre est décrit par le brevet EP1597636B1. Ce mode de procédé a été déposé avant tout pour l'intégration des modules électroniques de très petites tailles, à savoir par exemple d'une taille égale ou inférieur à 0.4 mm2 comme indiqué dans sa description. Le volume de matière à usiner pour intégrer un module électronique de très petite taille est forcément faible. Par contre l'intégration d'un module de communication en champ proche NFC de plus grande taille devient de suite selon ce procédé un casse-tête technique. Un inconvénient majeur dans ce procédé est qu'il est difficile d'usiner proprement un évidemment sur le pourtour mais en particulier dans la face latérale du verre de montre, surtout si le verre est constitué d'un matériau dur et difficile à travailler comme le verre saphir (corindon). L'usinage avec des outils CNC risque d'endommager le verre, qui est fait d'un matériau dur très cassant, ce qui entraîne des microfissures, des effritements ou bien des éclats sur les bordures de l'usinage pratiqué dans le verre et le rendant optiquement et esthétiquement inutilisable. De plus, la zone en dessus de la paroi de l'évidemment, dans laquelle souvent le chanfrein est façonnée (chanfrein qui est la petite surface formée par une arête abattue), peut s'effriter ou pire encore, peut se briser tout au long de la zone du bord et du chanfrein ainsi fragilisée par le creusage, respectivement par le fraisage à l'outil CNC, ce qui rend le verre inutilisable et entraîne des pertes importantes en pièces de fabrication et des coûts de production élevés. Seul un usinage dans un verre de montre plus épais qu'un verre de montre habituel, ou par un travail de creusage très lent par l'outil CNC on peut réduire partiellement ces risques. Mais ce travail au ralenti entraînera nécessairement des temps de production longs et donc des coûts de production élevés pour la fabrication et posent des problèmes techniques et esthétiques d'intégration d'un verre de montre plus épais dans une montre. Un autre inconvénient de ce procédé proposé est le manque de flexibilité dans le façonnage de la gorge qui n'est que très limitée, pour la plupart, seule un évidement avec une forme simple comme par exemple une gorge linéaire travaillé horizontalement par usinage CNC avec un disque diamanté, souvent en forme de V est approprié, ou bien un forage rond simple sont possibles. Toutefois le plus grand inconvénient est posé par l'impossibilité d'usiner une poche à l'intérieur de la gorge, dans laquelle le circuit intégré du module NFC devra prendre place au vu de sa grande taille, s'il s'agit d'un microprocesseur avec condensateur externe actuellement nécessaires pour le paiement sans contact par exemple, et tel que recherché à solutionner par la présente invention. Un usinage n'est pas possible d'être exécuté proprement par le procédé divulgué par le brevet EP1597636B1, car aucun outil CNC n'est actuellement adapté pour ce genre de fraisage pour créer la poche horizontalement en profondeur dans la gorge. Travailler la gorge et la poche avec des parois verticales à angles droits (par exemple en forme de L) afin que le module NFC puisse remplir au maximum l'espace dans la gorge avec son antenne et le circuit intégré dans la poche, avec le moins d'espace et d'encombrement possible, n'est tout simplement pas possible à être exécuté dans l'épaisseur d'une face latérale du verre de montre par l'art antérieur. Car ces parois sont en forme de V et/ou arrondies et non-travaillées et plus grand doivent être usinés la gorge et la poche pour placer le module dedans, ce qui rendrait la gorge et la poche trop grands par rapport à la taille et l'épaisseur du verre, le rendant fragile, inesthétique et donc invendable commercialement parlant. Il est à remarquer qu'un usinage au laser par ablation serait théoriquement possible, mais serait beaucoup trop cher et nécessiterait beaucoup trop de temps pour le processus d'ablation de microcouches dans le verre. L'inconvénient de l'absence d'une poche spécifique où loger le microcircuit ou microprocesseur engendre la nécessité d'épaissir l'usinage pour pouvoir superposer le microcircuit ou microprocesseur sur la bobine de cuivre formant l'antenne, avec pour conséquence de devoir insérer le module NFC sur des verres plus épais, se privant ainsi d'une gamme de montre nécessitant des verres plus fins. Usiner plus profondément pour pouvoir aligner la bobine de cuivre et le microcircuit à l'horizontal aurait encore plus d'inconvénients, en plus des contraintes techniques et économiques déjà énumérés, l'anneau contenant le module NFC serait élargi sur toute sa circonférence, créant un aspect visuel bien moins discret et élégant. L'absence d'une poche spécifique oblige également d'usiner une part importante de matière qui ne contiendra pas le module NFC et qui devra être à nouveau rempli par la suite d'une colle pour combler ce vide. Finalement un autre inconvénient du procédé est qu'il ne permet pas de réaliser une solution satisfaisante pour cacher du regard le module dans la gorge et la poche depuis le haut. Par exemple, l'impression ou la métallisation d'un revêtement couvrant esthétique à l'oeil avec ou sans décoration textuelle ou de symbole est impossible. Les parois ne pouvant pas être polies et restant rugueuses, un revêtement lisse et brillant par exemple, obtenue par impression en sérigraphie ou en appliquant un revêtement métallique ne sont pas possibles et le rendu optique et esthétique obtenu par une peinture de couverture faite à la main au pinceau ou en aérosol, aura un aspect mat, n'assurant pas une finition impeccable exigée par un tel produit de qualité. Un autre inconvénient est qu'un module NFC de type comprenant une bobine de cuivre formant l'antenne circulaire reliée au circuit intégré formant le module NFC ne pourrait pas être placé d'une seule pièce dans l'évidement et la poche. Dans le meilleur des cas, l'antenne étant enroulée à la main autour de la gorge, ne permettant pas l'automatisation et la fabrication automatisée à grande échelle. Une autre solution est proposée par la demande de brevet CH 713 968 A2 qui essaye de résoudre ce problème par une antenne à structure extensible et/ou réductible. Mais cette forme d'antenne est inhabituelle et compliquée à fabriquer. L'art antérieur n'offre donc pas la possibilité d'exécuter une fabrication de verre avec module NFC de façon satisfaisante pour la production d'une pièce d'habillage horloger de haute qualité, comme le verre saphir pour les montres d'entrée, de moyen et de haut de gamme.

### RESUME DE L'INVENTION

L'invention a le but de pallier à ces inconvénients de l'art antérieur en proposant de fournir un verre de montre à deux couches contenant un module de communication en champs proche NFC et un procédé de fabrication dudit verre. Un des avantages recherchés étant d'offrir une solution permettant la réalisation d'une poche dans la gorge. Un autre avantage est de pouvoir fabriquer des verres de montre moins épais. Un autre avantage recherché étant la réalisation d'un revêtement couvrant de qualité visuelle et de finition technique irréprochable et de pouvoir utiliser le revêtement couvrant de la poche comme logo publicitaire ou y apposer une marque par exemple. Ledit verre de montre de montre comprend un module de communication en champ proche NFC qui contient au moins un microcircuit ou un microprocesseur avec ou sans condensateur, relié à une antenne, et en permettant une communication fiable de données avec des lecteurs NFC. Ce dispositif inventif est facilement et rapidement intégrable dans une montre, y compris dans une montre en métal, et est simple à fabriquer et peut être fabriqué de façon industrielle et standardisée en grand nombres pour différents types de montres en différents matériaux et à un coût économique. A cet effet, l'invention concerne un verre composite de montre, qui comprend les caractéristiques mentionnées dans la revendication indépendante 1. L'invention concerne un verre de montre qui se compose de deux couches collés ensemble, dont la couche supérieure est faite de verre saphir ou minéral sur laquelle est facilement réalisable un revêtement couvrant, par exemple par impression en sérigraphie ou par un revêtement métallique sur sa surface intérieure sur le pourtour pour dissimuler le module NFC du regard depuis le haut, et dont la couche inférieure est fait de verre saphir ou minéral dans laquelle une gorge et une poche peuvent être aisément usinées avec un outil CNC adapté travaillant verticalement de l'extérieur vers l'intérieur et permettant ainsi un fraisage même de formes de gorge et de poche à géométries complexes et à parois droites, dans laquelle un module de communication en champ proche NFC peut être précisément agencé, ledit module NFC contenant un microcircuit ou un microprocesseur relié à une antenne. Ladite antenne prenant place dans la gorge, et le microcircuit ou microprocesseur prenant place dans la poche, avant que les deux couches soient collées ensemble avec une colle, par exemple une colle UV optiquement transparent qui est une colle qui polymérise sous l'action de l'ultraviolet, ou avec toute autre colle et ou adhésif approprié du type adhésif liquide optiquement transparent (LOCA). Selon l'une des multiples formes d'exécution possibles, les parois de la gorge et celles de la poche sont revêtus d'un revêtement couvrant diélectrique, comme par exemple une peinture noire opaque, dissimulant le module NFC du regard depuis le bas, assurant ainsi une finition propre du produit. Selon l'une des multiples formes d'exécution possibles, la décoration imprimée sur le pourtour de la couche supérieure, peut être fait d'une métallisation en couche mince électriquement conductrice, fonctionnant comme une antenne amplificatrice d'appoint à l'antenne.

Une variante de la forme d'exécution non limitative de l'invention avec une un revêtement couvrant diélectrique sur les parois de la gorge et de la poche dans la couche inférieure est définie dans la revendication 5.

Une variante de la forme d'exécution non limitative de l'invention avec une antenne amplificatrice d'appoint formée par le revêtement couvrant sur la surface inférieure de la couche supérieure est définie dans la revendication 6.

Une autre variante de la forme d'exécution de l'invention prévoit l'addition d'une feuille de ferrite située en dessous du module de communication en champs proche NFC dans la gorge et est définie dans la revendication 8.

Une variante possible de l'invention concerne un verre de montre à cout de fabrication économique qui se compose de deux couches collées ensemble, dont la couche supérieure est faite de verre saphir (corundum), et dont la couche inférieure est faite de verre minéral. Une autre forme possible de l'invention concerne un verre de montre qui se compose de deux couches collées ensemble, dont la couche supérieure est faite de verre minéral et dont la couche inférieure est faite de verre minéral.

A cet effet, l'invention concerne également un procédé de fabrication d'un verre de montre contenant un module NFC selon la revendication 9.

A cet effet, l'invention concerne également une montre selon la revendication 13.

### BREVE DESCRIPTION DES FIGURES

Les buts, avantages et caractéristiques du verre de montre contenant un module de communication en champs proche NFC selon l'invention apparaîtront mieux dans la description suivante sur la base d'au moins une forme d'exécution non limitative illustrée par les dessins sur lesquels :
- la figure 1 est une vue en perspective d'une montre comprenant le verre de montre avec le module en champs proche NFC selon l'invention ;
- La figure 1.1 est une vue latérale du verre de montre assemblé selon l'invention ;
- la figure 2 est une vue en perspective de la couche supérieure du verre de montre selon l'invention ;
- La figure 2.1 est une vue en coupe de la couche supérieure du verre de montre selon l'invention ;
- la figure 2.2 est une vue en perspective de la couche supérieure du verre de montre selon une variante possible de l'invention avec antenne amplificatrice d'appoint ;
- la figure 3 est une vue en en perspective de la couche inférieure du verre de montre selon l'invention ;
- la figure 3.1 est une vue en coupe de la couche inférieure du verre de montre selon l'invention ;
- la figure 3.2 est une vue en coupe d'un verre de montre selon l'art antérieur ;
- la figure 3.3 est une vue en coupe de la couche inférieure du verre de montre selon l'invention ;
- la figure 3.4 est une vue en coupe d'un verre de montre selon l'art antérieur ;
- la figure 4 est une vue en perspective du module de communication en champs proche NFC selon l'invention ;
- la figure 4.1 est une vue en perspective du module de communication en champs proche NFC placé dans la couche inférieure du verre de montre selon l'invention;
- la figure 4.2 est une vue en coupe du module de communication en champs proche NFC agencé dans la couche inférieure du verre qui comprend un revêtement couvrant réalisé dans la gorge et la poche, selon une variante de l'invention ;
- la figure 5 est une vue en coupe du verre de montre assemblé selon l'invention ;
- La figure 5.1 est une vue en coupe du verre de montre assemblé comprenant une feuille de ferrite selon une variante de l'invention ;
- la figure 6 est un organigramme représentant des étapes d'un procédé de fabrication d'un verre de montre contenant un module de communication en champs proche NFC selon l'invention ;
- la figure 6.1 est un organigramme représentant des étapes d'un procédé de fabrication d'un verre de montre contenant un module de communication en champs proche NFC selon une variante de l'invention ;
- la figure 6.2 est un organigramme représentant des étapes d'un procédé de fabrication d'un verre de montre contenant un module de communication en champs proche NFC selon une variante de l'invention ;
- la figure 6.3 est un organigramme représentant des étapes d'un procédé de fabrication d'un verre de montre contenant un module de communication en champs proche NFC selon une variante de l'invention.

### DESCRIPTION DETAILLEE DE L'INVENTION

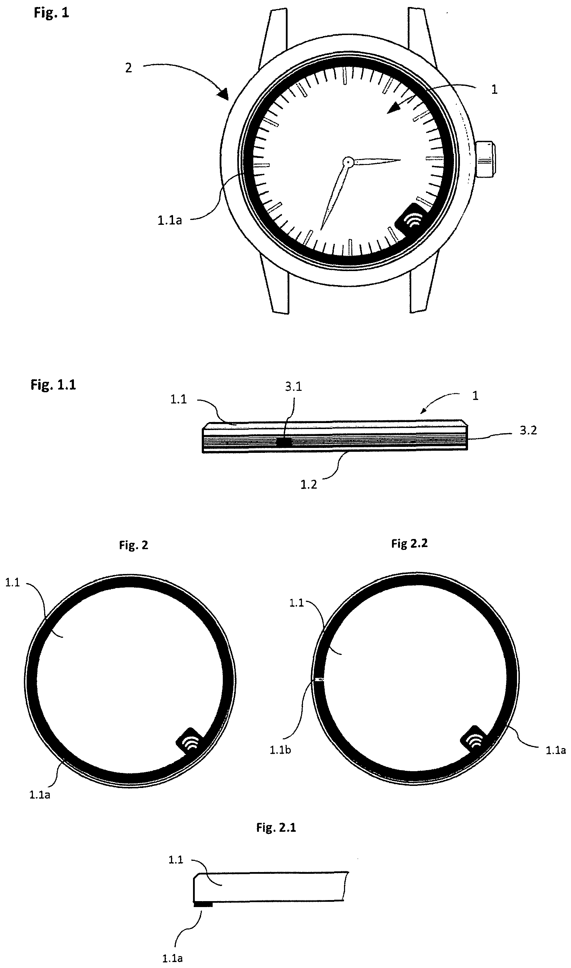

La figure 1 représente une montre 2 telle par exemple une montre-bracelet de type analogique ou numérique ou analogique-numérique ou montre de type hybride munie d'un verre de montre à structure composite 1 qui peut être réalisé dans un matériau saphir (corindon) ou minéral ou organique ou tout autre matériau transparent. Toute montre 2 équipée d'un verre de montre 1 inventif est facilement reconnaissable grâce au revêtement couvrant 1.1a visible sur le pourtour dudit verre 1. Ainsi, toute montre 2 équipée d'un tel verre de montre 1 contenant un module de communication en champs proche NFC 3 offre de nouvelles fonctionnalités comme par exemple d'utiliser ladite montre 2 comme un moyen de paiement sans contact en approchant simplement la montre d'un lecteur de paiement (POS terminal) pour procéder au paiement, ou afin d'améliorer son suivi tout au long de sa durée de vie ou encore pour lutter contre les contrefaçons dont elle peut faire l'objet, ou pour offrir des services et fonctions pour le porteur de la montre, comme par exemple l'accès ou l'identification physique ou digital. Le module de communication en champ proche NFC 3 compris dans le verre 1 est également apte de se connecter à un lecteur externe NFC qui est souvent intégré dans un smartphone ou une tablette ou un PC, lorsqu'il est situé à très courte distance dudit module de communication en champ proche NFC 3, et peut lui transmettre un signal radio fréquence (RF) relatif à des informations et/ou à des données concernant la montre ou la personne porteuse de la montre.

La fig. 1.1 montre comme vue latérale le verre de montre 1 une fois fabriqué selon l'invention avec la couche supérieure 1.1 collée sur la couche inférieure 1.2, comprenant le module de communication en champ proche NFC 3, composé au moins d'un microcircuit 3.1, qui peut être un circuit intégré (CI) ou un microprocesseur avec ou sans condensateur externe, relié à une antenne 3.2 en forme de bobine circulaire en cuivre. Le microcircuit 3.1 peut donc également comprendre ou non un condensateur externe non représente sur le dessin, selon besoin. Ce verre de montre 1 est facilement et rapidement intégrable dans une montre 2, y compris dans une montre en métal. Le verre composite 1 comprend selon besoin un chanfrein travaillé dans la surface externe de la couche supérieure 1.1 et un chanfrein travaillé dans la surface du bas de la couche inférieure 1.2. Le verre de montre 1 est chassé dans le boitier de montre ou dans la carrure de montre de la même manière qu'un verre saphir ou minéral de l'art antérieur, c'est à dire au moyen d'un joint d'étanchéité, par exemple un joint thermoplastique élastomère tel que Hytrel, ou par un joint de colle.

La figure 2 et la figure 2.1 montre la couche supérieure 1.1 en vue en perspective, respectivement en vue en coupe. Ladite couche supérieure 1.1 peut être réalisée dans un matériau saphir (corindon) ou minéral ou organique et comprend sur sa surface intérieure un revêtement couvrant 1.1a sur le pourtour du verre. Ce revêtement couvrant 1.1a, réalisé par exemple par un procédé d'impression en sérigraphie ou par un procédé de revêtement et/ou de traitement de surface de métal sur sa surface intérieure sur le pourtour pour dissimuler le module de communication en champs proche NFC 3 du regard depuis le haut. Il est à remarquer que les deux procédés de traitement de surface et de couvrement sont bien adaptés pour ce genre de réalisation, étant donné leur très faible épaisseur qui n'entravera en rien le collage parfait des deux couches par la suite, y compris à leur résistance au vieillissement et au rayonnement UV. L'impression en sérigraphie ou la métallisation d'un revêtement couvrant sont esthétiques à l'oeil et offrent un visuel parfait du produit fini et la possibilité d'ajouter une décoration textuelle ou de symbole, par exemple un logo ou un indicateur appliqué dans la partie du revêtement couvrant qui couvre la poche.

La figure 2.2 montre la couche supérieure du verre de montre 1.1 selon une variante possible de l'invention, c'est à dire avec le revêtement couvrant adapté à devenir une antenne amplificatrice (booster) d'appoint à l'antenne 3.2. En réalisant le revêtement couvrant par un revêtement métallique qui est électriquement conducteur et qui est fendu on obtient une antenne amplificatrice. La fente étant d'une largeur adaptable entre 0.1mm à plusieurs millimètres, selon le réglage fin avec l'antenne 3.2. Un revêtement métallique avec une fente fonctionnera comme antenne amplificatrice d'appoint et donnera une brillance et un lustre métallique très esthétique. Il est à remarquer que le revêtement couvrant réalisé par impression en sérigraphie avec une encre électriquement conductrice, ou bien par métallisation mais sans prévoir une fente, fonctionnera également comme antenne amplificatrice d'appoint à l'antenne 3.2, mais sera sensiblement moins performant et efficace.

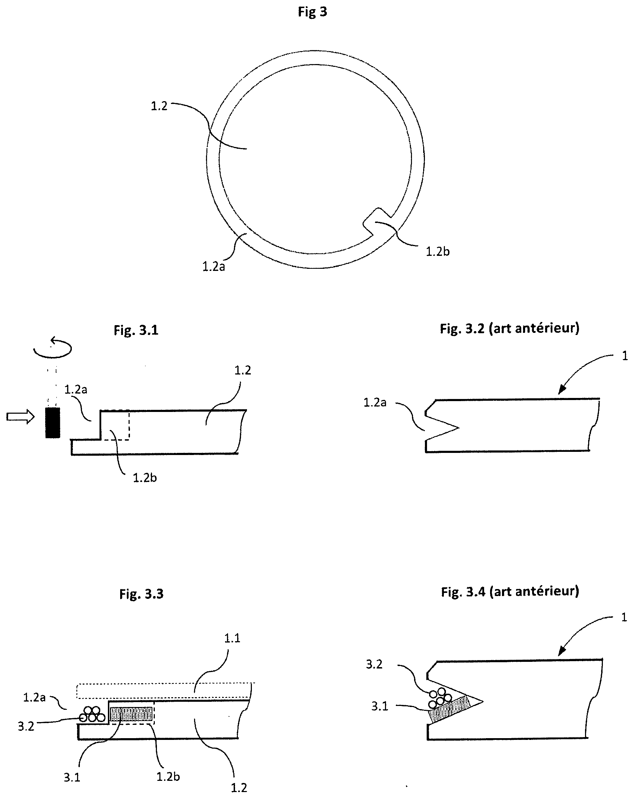

La figure 3 et la figure 3.1 montrent la couche inférieure 1.2 en vue en perspective, respectivement en vue en coupe. Ladite couche inférieure 1.2 peut être réalisée dans un matériau saphir (corindon) ou minéral ou organique. Une gorge 1.2a et une poche 1.2b sont façonnés sur le pourtour extérieur de la couche inférieure 1.2. L'usinage de la gorge 1.2a est réalisé rapidement et précisément avec un outil CNC adéquat par creusage et/ou par fraisage, par exemple avec une foret diamanté cylindrique ou une pointe de fraisage cylindrique, progressant depuis l'extérieur du bord de la couche inférieure 1.2 vers l'intérieur pour creuser la gorge 1.2a et la poche 1.2b, sans provoquer des microfissures, des effritements et des éclats dans le substrat travail, même s'il s'agit d'un dur très cassant comme le verre saphir (corundum). Selon l'invention, les parois peuvent être ainsi rendues verticales et sans arrondis. Ce travail peut être exécuté à grande vitesse par l'outil CNC et le temps de production est court et donc des coûts de productions seront bas pour la fabrication.

Un avantage est qu'une grande flexibilité dans la structuration géométrique de la gorge 1.2a et de la poche 1.2b est assuré. Un autre avantage est que la gorge 1.2a, et la poche 1.2b, grâce à des parois verticales à angle droit, pourront être exécutés avec un espace et encombrement réduit pour recevoir le module de communication en champs proche NFC 3, un facteur optique et esthétique important de l'invention. Une finition irréprochable étant exigée pour une telle pièce d'habillage horloger de haute qualité utilisée pour les montres d'entrée, de moyen et de haut de gamme. Il est à remarquer qu'un usinage au laser par ablation est aussi envisageable pour exécuter ce travail.

Avantageusement, les parois de la gorge 1.2a et celles de la poche 1.2b sont revêtus d'un revêtement couvrant diélectrique, comme par exemple une peinture noire opaque, dissimulant le module NFC 3 du regard depuis le bas, assurant ainsi une finition propre du produit.

La figure 3.2 montre très bien les limites imposées par l'art antérieur dans l'usinage d'une gorge dans un verre de montre d'art antérieur. La forme de fraisage et/ou creusage étant souvent de forme en V ou U ou arrondi, le volume réduit de l'excavation nécessite une gorge plus profonde et plus épaisse, et qui rend impossible la réalisation d'un verre de montre 1 d'une faible épaisseur pour placer le module de communication en champs proche NFC 1. Avantageusement, selon la figure 3.3 qui montre le microcircuit ou microprocesseur 3.1 prenant place dans la poche 1.2b et l'antenne 3.2 prenant place horizontalement par rapport audit microcircuit ou microprocesseur 3.1 dans la gorge 1.2a, rend également possible l'intégration du module de communication en champs proche NFC 3 dans des verres minces d'une épaisseur correspondant aux verres communément utilisés pour les montres de type classiques.

La figure 3.4 démontre la contrainte de l'art antérieur sur la nécessité de superposer le microcircuit ou microprocesseur 3.1 et l'antenne 3.2 dans la gorge. Un alignement latéral du microcircuit ou microprocesseur 3.1 et l'antenne 3.2 dans la gorge nécessiterait d'usiner plus profondément en augmentant l'épaisseur du verre.

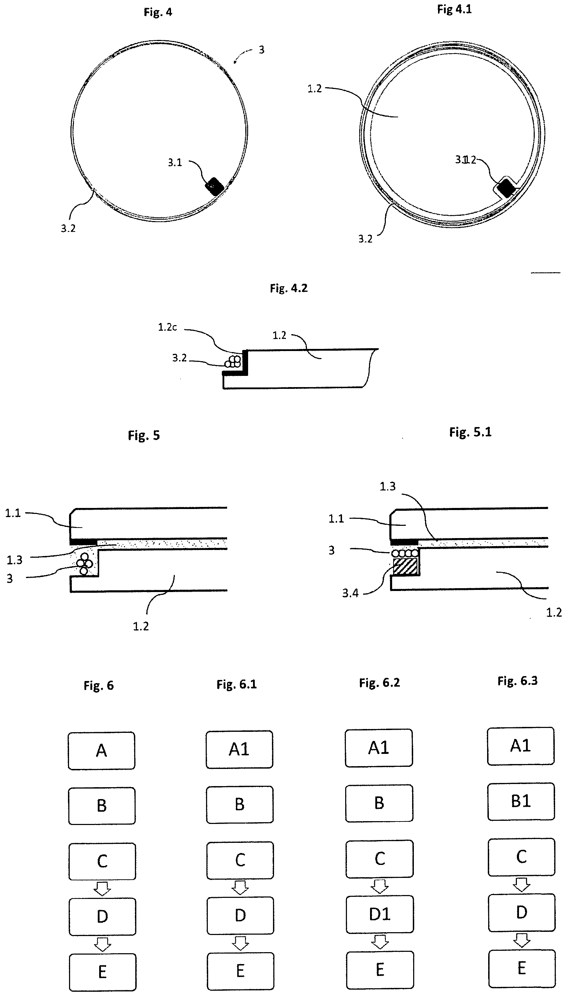

La figure 4 montre le module de communication en champs proche NFC 3 qui contient au moins un microcircuit ou un microprocesseur 3.1 relié à une antenne 3.2 formée d'une bobine de cuivre circulaire, permettant la communication fiable de données avec des lecteurs NFC non représenté sur le dessin. Une variante possible du présent mode de réalisation non limitatif peut prévoir un module de communication en champs proche NFC 3 comprenant en plus un condensateur externe situé proche du microcircuit ou du microprocesseur 3.1 et prenant également place dans la poche 1.2b.

La figure 4.1 montre le module de communication en champ proche NFC 3 qui a pris place dans la couche inférieure 1.2. L'antenne 3.2 prenant place dans la gorge 1.2a, et le microcircuit ou microprocesseur 3.1 prenant place dans la poche 1.2b.

La figure 5 montre schématiquement la couche supérieure 1.1 et la couche inférieure 1.2 collées ensemble par un adhésive ou colle 1.3, par exemple avec une colle UV optiquement transparent qui est une colle qui polymérise sous l'action de l'ultraviolet, ou avec toute autre colle et ou adhésif approprié du type adhésif liquide optiquement transparent (LOCA). La lampe UV permettant le séchage rapide, finalisant l'assemblage des deux couches. On reconnait sur la figure 5 le module de communication en champ proche NFC 3 pris en sandwich entre les deux couches et également collé et scelle dans la gorge 1.2a, respectivement dans la poche 1.2b. Il est à préciser que la gorge 1.2a est également remplie et scellée par la colle. 1.3. Selon besoin, la gorge 1.2a, si elle n'est pas proprement et/ou complétement remplie et scellé par la colle 1.3, peut être scellée avec un corps diélectrique de remplissage qui peut être composé d'un matériau diélectrique comme par exemple de la résine époxyde d'encapsulation et/ou d'enrobage de composants électroniques, ou tout autre matériau composite ou organique adapté comme isolateur électrique pour ce genre de scellement.

La figure 4.2 montre une variante du présent mode d'exécution non limitatif de l'invention, avec la réalisation d'un revêtement couvrant diélectrique sur les parois de la gorge 1.2a et de la poche 1.2b, comme par exemple une peinture noire opaque, dissimulant le module NFC du regard depuis le bas, assurant ainsi une finition propre du produit.

La figure 5.1 montre une autre variante du présent mode d'exécution non limitatif de l'invention, avec l'addition d'une feuille de ferrite 3.4 posée sur le fond de la gorge et/ou dans la poche 1.2b qui fonctionne comme écran magnétique, utile notamment lorsqu'un blindage magnétique est nécessaire, comme par exemple dans certaines montres en métal ou bien des montres comprenant de composants en métal.

Un procédé de fabrication d'un verre de montre contenant un module en champs proche NFC 3 selon l'invention va maintenant être décrit en référence à la figure 6. Le verre de montre contenant un module de communication en champs proche NFC 1 fabriqué est illustré sur les figures 1 et 1.1. Le procédé comprend les étapes initiales A, B, C au cours desquelles la couche supérieure 1.1, la couche inférieure 1.2 et le module de communication en champs proche NFC 3 sont séparément fabriqués. L'ordre chronologique de fabrication de ces trois étapes A, B, C n'a pas d'importance.

Au cours de l'étape A, la couche supérieure 1.1 est fabriquée, selon besoin avec ou sans chanfrein, et selon besoin avec ou sans traitement antireflets (AR), comme cela est pratiqué dans la fabrication de verres de montres. La figure 2 et la figure 2.1 montre la couche supérieure 1.1 en vue en perspective, respectivement en vue en coupe. Ladite couche supérieure 1.1 est réalisée dans un matériau saphir (corindon) ou minéral ou organique et sur sa surface intérieure un revêtement couvrant 1.1a est réalisé sur le pourtour. Ce revêtement couvrant 1.1a, est par exemple réalisé par impression en sérigraphie ou par métallisation et peut selon besoin, également comprendre une décoration textuelle ou de symbole, par exemple un logo ou un indicateur appliqué dans la partie du revêtement couvrant qui couvre la poche 2.1b.

Au cours une étape suivante B, la couche inférieure 1.2 est fabriquée, selon besoin avec ou sans chanfrein, et selon besoin avec ou sans traitement antireflets (AR), comme cela est pratiqué dans la fabrication de verres de montres. La figure 3 et la figure 3.1 montrent la couche inférieure 1.2 en vue en perspective, respectivement en vue en coupe. Ladite couche inférieure 1.2 est réalisée dans un matériau saphir (corindon) ou minéral ou organique. Une gorge 1.2a et une poche 1.2b sont usinées horizontalement sur le pourtour extérieur de la couche inférieure 1.2. L'usinage de la gorge 1.2a est réalisé avec un outil CNC adéquat par creusage et/ou par fraisage, par exemple avec un foret diamanté cylindrique ou une pointe de fraisage cylindrique, progressant depuis l'extérieur du bord vers l'intérieur pour creuser la gorge 1.2a et la poche 1.2b au même niveau ou une hauteur différente pour s'adapter à l'épaisseur du microcircuit ou microprocesseur 3.1 et à celle de l'antenne 3.2. Grâce au fraisage et/ou creusage avec l'outil CNC avec un foret adapté depuis le haut, voir la figure 3.1, les parois de la gorge 1.2a et celles de la poche 1.2b sont rendues verticales, lisses et sans angles arrondies ou bien arquées, et le fond est rendu plat et à même niveau entre la gorge 1.2a et la poche1.2b.

Au cours d'une étape suivante C, le module de communication en champs proche NFC 3 est fabriqué d'une seule pièce, comme cela se fait dans l'industrie pour la fabrication de transpondeurs à bobine d'air pour diverses solutions en technologie NFC ou RFID. La figure 4 montre le module de communication en champs proche NFC 3 qui est composé d'un microcircuit ou d'un microprocesseur 3.1 relié à une antenne 3.2 formée d'une bobine de cuivre circulaire de type bobine d'air. Selon besoin on peut également prévoir un condensateur externe qui est placé entre l'antenne 3.2 et le microcircuit ou microprocesseur 3.1.

Dans l'étape suivante D, le module de communication en champs proche NFC 3 est placé dans la gorge 1.2a et dans la poche 1.2b de la couche inférieure 1.2. La figure 4.1 et la figure 4.2 montrent le module de communication en champ proche NFC 3 qui prend place dans la couche inférieure 1.2. L'antenne 3.2 prenant place dans la gorge 1.2a, et le microcircuit ou microprocesseur 3.1 prenant place dans la poche 1.2b.

Dans l'étape finale E, les deux couches sont collées ensemble. Comme cela est représenté schématiquement à la figure 5, la couche supérieure 1.1 est collée ensemble avec la couche inférieure 1.2 avec un adhésive ou une colle 1.3, par exemple avec une colle UV optiquement transparent qui est une colle qui polymérise sous l'action de l'ultraviolet, ou avec toute autre colle et ou adhésif approprié du type adhésif liquide optiquement transparent (LOCA). La lampe UV, non représentée sur le dessin permet le séchage rapide, finalisant l'assemblage des deux couches. On reconnait sur la figure 5 le module de communication en champ proche NFC 3 pris en sandwich entre les deux couches et est scellé avec la gorge 1.2a, respectivement dans la poche 1.2b. Il est à préciser que la gorge 1.2a est également remplie et scellée par la colle. 1.3. Selon besoin, la gorge 1.2a, si elle n'est pas proprement et/ou complétement remplie et scellé par la colle 1.3, peut être scellée avec un corps diélectrique de remplissage qui peut être composé d'un matériau diélectrique comme par exemple de la résine époxyde d'encapsulation et/ou d'enrobage de composants électroniques, ou tout autre matériau composite ou organique adapté comme isolateur électrique pour ce genre de scellement.

Une variante possible du procédé de fabrication d'un verre de montre contenant un module en champs proche NFC 3 selon l'invention est décrit en référence à la figure 6.1. Au cours de l'étape A1, la couche supérieure 1.1 est fabriquée, selon besoin avec ou sans chanfrein, et selon besoin avec ou sans traitement antireflets (AR), comme cela est pratiqué dans la fabrication de verres de montres. La figure 2.1 montre la couche supérieure 1.1 en vue en coupe. Ladite couche supérieure 1.1 est réalisée dans un matériau saphir (corindon) ou minéral ou organique et sur sa surface intérieure un revêtement couvrant 1.1a est réalisé sur le pourtour. La figure 2.2 montre la couche supérieure 1.1 selon une variante possible de l'invention, c'est à dire avec le revêtement couvrant adapté à fonctionner comme antenne amplificatrice d'appoint à l'antenne 3.2. Le revêtement couvrant est réalisé par un traitement en multicouches métallique qui est électriquement conducteur et qui grâce à sa fente 1.1b pratiquée dans le revêtement pour le séparer, crée une antenne amplificatrice. La fente 1.1b étant d'une largeur adaptable entre 0.1mm au minimum à plusieurs millimètres au maximum, selon besoin de réglage fin avec l'antenne 3.2. Il est à remarquer que le revêtement couvrant fonctionnant comme antenne amplificatrice d'appoint, peut également être réalisé par impression en sérigraphie avec une encre électriquement conductrice, ou bien par métallisation mais sans prévoir nécessairement une fente, sous réserve qu'elle sera moins performante. Les étapes suivantes B à E restent identiques à celles décrites ci-dessus dans le procédé de fabrication selon la figure 6 et ne seront pas répétées ici.

Une autre variante possible du procédé de fabrication d'un verre de montre contenant un module en champs proche NFC 3 selon l'invention est décrit en référence à la figure 6.2. Au cours de l'étape D1 une feuille de ferrite 3.4 est insérée dans la gorge 1.2a et la poche 1.2b avant de placer ensuite le module de communication en champs proche NFC 3 sur ladite feuille de ferrite 3.4 dans la gorge 1.2a et la poche 1.2b de la couche inférieure 1.2. La figure 5.1 montre la feuille de ferrite 3.4 posée sur le fond de la gorge et/ou dans la poche 1.2b et qui fonctionne comme écran magnétique, très utile notamment lorsqu'un blindage magnétique est nécessaire, comme par exemple dans certaines montres en métal ou bien des montres comprenant de composants en métal qui gênent la transmission des données entre ledit module NFC 3 et le lecteur NFC externe. Les autres étapes restent identiques à celles décrites dans l'un ou l'autre procédé de fabrication selon figure 6 ou figure 6.1 décrits ci-dessus, et ne seront pas répétées ici.

Finalement, une variante possible du procédé de fabrication d'un verre de montre contenant un module en champs proche NFC 3 selon l'invention est décrit en référence à la figure 6.3. Au cours de l'étape B1, les parois de la gorge 1.2a et celles de la poche 1.2b sont revêtus d'un revêtement couvrant diélectrique, comme par exemple une peinture noire opaque, dissimulant le module NFC du regard depuis le bas, assurant ainsi une finition propre du produit.

## Revendications

1. Verre de montre (1) comprenant un module de communication en champ proche NFC (3) qui contient au moins un microcircuit ou un microprocesseur (3.1) relié à une antenne (3.2), **caractérisé en ce que** le verre est constitué d'une couche inférieure qui comprend une gorge dans son pourtour supérieur et une poche (1.2b) qui se situe en prolongement latéral de la gorge, **en ce que** le microcircuit (3.1) ou microprocesseur (3.1) est positionné dans la poche (1.2b), **en ce que** l'antenne (3.2) est positionné dans la gorge (1.2a), et d'une couche supérieure qui comprend sur son pourtour intérieur un revêtement couvrant, ledit revêtement couvrant se positionnant précisément sur la gorge et la poche lors du collage des deux couches, afin de dissimuler le module de communication en champ proche NFC.

2. Verre de montre (1) selon la revendication 1, caractérisé en ce la couche supérieure (1.1) et/ou la couche inférieure (1.2) est réalisée dans un matériau saphir (corindon) ou minéral ou organique ou tout autre matériau optiquement transparent.

3. Verre de montre (1) selon la revendication 1 et 2, **caractérisé en ce que** les parois dans la gorge (1.2a) et/ou dans la poche (1.2b) de ladite couche inférieure (1.2) sont usinés verticalement.

4. Verre de montre (1) selon l'une des revendications précédentes, **caractérisé en ce que** la gorge (1.2a) et la poche (1.2b) ne sont pas usinées à la même hauteur

5. Verre de montre (1) selon l'une des revendications précédentes, **caractérisé en ce que** les parois de la gorge 1.2a et celles de la poche 1.2b sont revêtus d'un revêtement couvrant diélectrique.

6. Verre de montre (1) selon l'une des revendications précédentes, **caractérisé en ce que** le revêtement couvrant (1.1a) compris dans la couche supérieure (1.1) est réalisé en un matériau électriquement conducteur formant une antenne amplificatrice d'appoint à l'antenne (3.2) du module de communication en champ proche NFC (3) et pouvant être réalisé en forme d'un anneau fendu (1.1b) ou soit en forme d'un anneau non fendu.

7. Verre de montre (1) selon l'une des revendications précédentes, **caractérisé en ce que** le module de communication en champs proche NFC (3) est placé d'une seule pièce dans la gorge (1.2a) et poche (1.2b) de la couche inférieure (1.2).

8. Verre de montre (1) selon l'une des revendications précédentes, caractérisé en ce la couche inférieure (1.2) comprend une feuille de ferrite (3.4) placée dans la gorge (1.2a) et/ou dans la poche (1.2b) et fonctionnant comme un écran de blindage.

9. Procédé de fabrication d'un verre de montre (1) qui se compose de deux couches collées ensemble et comprenant un module de communication en champ proche NFC (3) qui contient au moins un microcircuit ou un microprocesseur (3.1) relié à une antenne (3.2), le procédé comprenant les étapes suivantes :
- fabriquer (A) la couche supérieure (1.1) qui comprend sur son pourtour intérieur un revêtement couvrant (1.1a) ;
- fabriquer (B) la couche inférieure (1.2) avec usinage d'une gorge (1.2a) dans son pourtour supérieur et usinage d'une poche (1.2b) qui se situe en prolongement latéral de la gorge ;
- fabriquer (C) d'une seule pièce le module de communication en champs proche NFC (3) comprenant au moins un microcircuit ou un microprocesseur (3.1) relié à une antenne (3.2) ;
- placer (D) le module de communication en champs proche NFC (3) dans la gorge (1.2a) et poche (1.2b) de la couche inférieure (1.2) ;
- coller (E) la couche supérieure (1.1) avec la couche inférieure (1.2) ensemble avec une colle (1.3), le revêtement couvrant se positionnant précisément sur la gorge et la poche lors du collage des deux couches, afin de dissimuler le module de communication en champ proche NFC.

10. Procédé selon la revendication 9, **caractérisé en ce que** l'une des étapes consiste à fabriquer (A1) la couche supérieure (1.1) avec un revêtement couvrant (1.1a) réalisé en un matériau électriquement conducteur formant une antenne amplificatrice d'appoint à l'antenne (3.2) du module de communication en champ proche NFC (3) et pouvant être réalisé en forme d'un anneau fendu (1.1b) ou soit en forme d'un anneau non fendu.

11. Procédé selon la revendication 9 ou 10, **caractérisé en ce que** l'une des étapes consiste à placer (D1) premièrement la feuille de ferrite (3.4) dans la gorge (1.2a) et/ou dans la poche (1.2b) de la couche inférieure (1.2), puis deuxièmement poser le module de communication en champs proche NFC (3) sur ladite feuille de ferrite (3.4).

12. Procédé selon revendication 9, 10 ou 11, **caractérisé en ce que** l'une des étapes consiste à réaliser (B1) les parois de la gorge 1.2a et celles de la poche 1.2b revêtus d'un revêtement couvrant diélectrique.

13. Montre (2) comportant un verre de montre (1) comprenant un module de communication en champs proche NFC (3) selon l'une des revendications 1 à 8.

## Patentansprüche

1. Uhrenglas (1) mit einem NFC-Nahfeldkommunikationsmodul (3), welches mindestens einen Mikroschaltkreis oder Mikroprozessor (3.1) enthält, der mit einer Antenne (3.2) verbunden ist, **dadurch gekennzeichnet, dass** das Glas aus einer unteren Schicht besteht, welche an ihrem oberen Rand eine Nut und eine sich in seitlicher Verlängerung der Nut befindende Tasche (1.2b) aufweist, dass der Mikroschaltkreis (3.1) oder Mikroprozessor (3.1) in der Tasche (1.2b) positioniert ist, dass die Antenne (3.2) in der Nut (1.2a) positioniert ist, und aus einer oberen Schicht besteht, welche an ihrem inneren Rand eine Abdeckschicht aufweist, wobei die besagte Abdeckschicht beim Verbinden der beiden Schichten genau auf der Nut und der Tasche positioniert ist, um das NFC-Nahfeldkommunikationsmodul zu verbergen.

2. Uhrenglas (1) gemäss Anspruch 1, **dadurch gekennzeichnet, dass** die obere Schicht (1.1) und/oder die untere Schicht (1.2) aus Saphir (Korund) oder mineralischem oder organischem Material oder irgendeinem anderen optisch transparenten Material besteht.

3. Uhrenglas (1) gemäss Anspruch 1 und 2, **dadurch gekennzeichnet, dass** die Wände in der Nut (1.2a) und/oder in der Tasche (1.2b) der besagten unteren Schicht (1.2) vertikal bearbeitet sind.

4. Uhrenglas (1) gemäss einem der vorhergehenden Ansprüche, **dadurch gekennzeichnet, dass** die Nut (1.2a) und die Tasche (1.2b) nicht auf gleicher Höhe bearbeitet sind.

5. Uhrenglas (1) gemäss einem der vorhergehenden Ansprüche, **dadurch gekennzeichnet, dass** die Wände der Nut (1.2a) und diejenigen der Tasche (1.2b) mit einer dielektrischen Abdeckschicht beschichtet sind.

6. Uhrenglas (1) gemäss einem der vorhergehenden Ansprüche, **dadurch gekennzeichnet, dass** die in der oberen Schicht (1.1) enthaltene Abdeckschicht (1.1a) aus einem elektrisch leitfähigen Material besteht, welche eine zusätzliche Verstärkerantenne zur Antenne (3.2) des NFC-Nahfeldkommunikationsmoduls (3) bildet, und in Form eines geteilten Rings (1.1b) oder in Form eines ungeteilten Rings ausgeführt sein kann.

7. Uhrenglas (1) gemäss einem der vorhergehenden Ansprüche, **dadurch gekennzeichnet, dass** das NFC-Nahfeldkommunikationsmodul (3) einstückig in der Nut (1.2a) und Tasche (1.2b) der unteren Schicht (1.2) angeordnet ist.

8. Uhrenglas (1) gemäss einem der vorhergehenden Ansprüche, **dadurch gekennzeichnet, dass** die untere Schicht (1.2) aus einer in der Nut (1.2a) und/oder in der Tasche (1.2b) angeordneten Ferritplatte (3.4) besteht, welche als Abschirmung fungiert.

9. Verfahren zur Herstellung eines Uhrenglases (1), welches aus zwei miteinander verbundenen Schichten besteht und ein NFC-Nahfeldkommunikationsmodul (3) umfasst, das mindestens einen Mikroschaltkreis oder Mikroprozessor (3.1) enthält, der mit einer Antenne (3.2) verbunden ist, wobei das Verfahren die folgenden Schritte umfasst:
- Herstellen (A) der oberen Schicht (1.1), die an ihrem inneren Umfang eine Abdeckschicht (1.1a) aufweist;
- Herstellung (B) der unteren Schicht (1.2) mit Einarbeiten einer Nut (1.2a) in ihren oberen Umfang und Bearbeiten einer Tasche (1.2b), welche sich in seitlicher Verlängerung der Nut befindet;
- einstückiges Herstellen (C) des NFC-Nahfeldkommunikationsmoduls (3), welches mindestens einen Mikroschaltkreis oder Mikroprozessor (3.1) umfasst, der mit einer Antenne (3.2) verbunden ist;
- Anordnen (D) des NFC-Nahfeldkommunikationsmoduls (3) in der Nut (1.2a) und Tasche (1.2b) der unteren Schicht (1.2);
- Verkleben (E) der oberen Schicht (1.1) mit der unteren Schicht (1.2) mittels eines Klebstoffs (1.3), wobei die Abdeckschicht beim Verkleben der beiden Schichten passgenau auf der Nut und der Tasche angeordnet wird, um das NFC-Nahfeldkommunikationsmodul zu verbergen.

10. Verfahren gemäss Anspruch 9, **dadurch gekennzeichnet, dass** einer der Schritte darin besteht, die obere Schicht (1.1) mit einer Abdeckschicht (1.1a) aus einem elektrisch leitfähigen Material zu versehen (A1), welche eine zusätzliche Verstärkerantenne zur Antenne (3.2) des NFC-Nahfeldkommunikationsmoduls (3) bildet. und in Form eines geteilten Rings (1.1b) oder in Form eines ungeteilten Rings ausgeführt sein kann.

11. Verfahren gemäss Anspruch 9 oder 10, **dadurch gekennzeichnet, dass** einer der Schritte darin besteht, zunächst die Ferritplatte (3.4) in die Nut (1.2a) und/oder in die Tasche (1.2b) der unteren Schicht (1.2) anzuordnen (D1) und dann zweitens das NFC-Nahfeldkommunikationsmodul (3) auf die Ferritplatte (3.4) zu legen.

12. Verfahren gemäss Anspruch 9, 10 oder 11, **dadurch gekennzeichnet, dass** einer der Schritte darin besteht, die Wände der Nut (1.2a) und der Tasche (1.2b) mit einer dielektrischen Abdeckschicht zu beschichten (B1).

13. Uhr (2) mit einem Uhrenglas (1) mit einem NFC-Nahfeldkommunikationsmodul (3) gemäss einem der Ansprüche 1 bis 8.

## Claims

1. Watch glass (1) comprising a near-field communication (NFC) module (3) that includes at least one microchip or microprocessor (3.1) connected to an antenna (3.2), **characterized in that** the glass is composed of a lower layer comprising a groove (1.2a) along its upper peripheral edge and a pocket (1.2b) extending laterally from said groove, **in that** the microchip or microprocessor (3.1) is positioned in the pocket (1.2b), **in that** the antenna (3.2) is positioned in the groove (1.2a), and **in that** the glass is further composed of an upper layer having, along its inner periphery, a covering coating, said covering coating being precisely positioned over the groove and the pocket during the bonding of the two layers, so as to conceal the near-field communication (NFC) module.

2. Watch glass (1) according to claim 1, **characterized in that** the upper layer (1.1) and/or the lower layer (1.2) is made of sapphire (corundum), mineral, organic, or any other optically transparent material.

3. Watch glass (1) according to claims 1 and 2, **characterized in that** the walls of the groove (1.2a) and/or of the pocket (1.2b) in said lower layer (1.2) are machined vertically.

4. Watch glass (1) according to any one of the preceding claims, **characterized in that** the groove (1.2a) and the pocket (1.2b) are not machined at the same height.

5. Watch glass (1) according to any one of the preceding claims, **characterized in that** the walls of the groove (1.2a) and the walls of the pocket (1.2b) are coated with a dielectric covering layer.

6. Watch glass (1) according to any one of the preceding claims, **characterized in that** the covering coating (1.1a) included in the upper layer (1.1) is made of an electrically conductive material forming an auxiliary booster antenna for the antenna (3.2) of the near-field communication (NFC) module (3), and may be formed as either a split ring (1.1b) or a non-split ring.

7. Watch glass (1) according to any one of the preceding claims, **characterized in that** the near-field communication (NFC) module (3) is placed as a single piece into the groove (1.2a) and the pocket (1.2b) of the lower layer (1.2).

8. Watch glass (1) according to any one of the preceding claims, **characterized in that** the lower layer (1.2) comprises a ferrite sheet (3.4) placed in the groove (1.2a) and/or in the pocket (1.2b), acting as a shielding screen.

9. Method for manufacturing a watch glass (1) composed of two bonded layers and comprising a near-field communication (NFC) module (3) including at least one microchip or microprocessor (3.1) connected to an antenna (3.2), the method comprising the following steps:
- manufacturing (A) the upper layer (1.1), which comprises a covering coating (1.1a) along its inner periphery;
- manufacturing (B) the lower layer (1.2) by machining a groove (1.2a) along its upper peripheral edge and machining a pocket (1.2b) laterally extending from said groove;
- manufacturing (C) in one piece the near-field communication (NFC) module (3) comprising at least one microchip or microprocessor (3.1) connected to an antenna (3.2);
- placing (D) the near-field communication (NFC) module (3) in the groove (1.2a) and pocket (1.2b) of the lower layer (1.2);
- bonding (E) the upper layer (1.1) to the lower layer (1.2) using an adhesive (1.3), the covering coating being precisely positioned over the groove and the pocket during bonding of the two layers, so as to conceal the near-field communication (NFC) module.

10. Method according to claim 9, **characterized in that** one of the steps consists of manufacturing (A1) the upper layer (1.1) with a covering coating (1.1a) made of an electrically conductive material forming an auxiliary booster antenna for the antenna (3.2) of the near-field communication (NFC) module (3), and may be formed as a split ring (1.1b) or a non-split ring.

11. Method according to claim 9 or 10, **characterized in that** one of the steps consists of placing (D1), first, a ferrite sheet (3.4) in the groove (1.2a) and/or in the pocket (1.2b) of the lower layer (1.2), and then placing the near-field communication (NFC) module (3) on said ferrite sheet (3.4).

12. Method according to claim 9, 10 or 11, **characterized in that** one of the steps consists of forming (B1) the walls of the groove (1.2a) and the walls of the pocket (1.2b) with a dielectric covering coating.

13. Watch (2) comprising a watch glass (1) including a near-field communication (NFC) module (3) according to any one of claims 1 to 8.
